# EUROPÄISCHE PATENTANMELDUNG

(11) **EP 1 104 884 A2**
(43) Veröffentlichungstag der Anmeldung: **06.06.2001**
(21) Anmeldenummer: 00124164.5
(22) Anmeldetag: 07.11.2000
(51) Int. Cl.: G01N 27/414

(54) **Brandmelder mit Gassensoren**

(30) Priorität: 23.11.1999 DE 19956303
(71) Anmelder: SIEMENS AKTIENGESELLSCHAFT, 80333 München (DE)
(72) Erfinder: Fleischer, Maximilian, Dr., 85635 Höhenkirchen (DE); Meixner, Hans, Prof., 85540 Haar (DE); Moser, Otto-Walter, 81373 München (DE); Ostrick, Bernhard, 81541 München (DE)

(57) **Zusammenfassung**

Es wird ein Brandmelder mit mindestens einem Gassensor beschrieben, wobei die Detektion mit einem Feldeffekttransistor vorgesehen ist, wobei die Gate-Elektrode des Transistors zur Gasdetektion eine oder mehrere gassensitive Schichten aufweist, so daß die Kanalleitfähigkeit des Transistors in Abhängigkeit von einem oder mehreren zu detektierenden Gasen steuerbar ist.

## Beschreibung

Die Erfindung betrifft einen Brandmelder mit mindestens einem Gassensor, gemäß dem Oberbegriff des Anspruchs 1.

Aufgabe eines Brandmelders ist eine möglichst rasche und störsichere Branddetektion durch die Messung brandkorrelierter oder brandbegleitender Größen.

Zur Branderkennung und -meldung wird
1) die Hitzeentwicklung,
2) die Rauchentwicklung und
3) das Entstehen brandbegleitender Gase
herangezogen.

Bisherige Brandmelder verwenden daher zur Branddetektion einzelne oder Kombinationen folgender Detektionsverfahren:
a) Detektion der bei einem Brand entstehenden Wärme über eine Temperaturmessung,
b) Detektion des entstehenden Aerosols (Rauch) über optische Verfahren wie zum Beispiel
   ba) Streulichtmessung und
   bb) Lichtschwächung im optischen Bereich,
c) Detektion brandbegleitender Gase mit Hilfe von Brandgassensoren. Dazu gehören:
   ca) elektrochemische Sensoren (zum Beispiel für CO₂)
   cb) Infrarotsensoren (Strahlungsschwächung durch Absorption von IR-Licht im charakteristischen Spektralbereich)
   cc) Farbänderung von Indikatorsubstanzen bei Exposition mit basischen/sauren Gasen
   cd) halbleitende (resistive) Sensoren auf der Basis von Metalloxiden (zum Beispiel Leitfähigkeitsänderung von SnO₂ bei Exposition an CO, H₂, NOₓ etc.)
   ce) massensensitive Sensoren (zum Beispiel Quarzdickenschwinger, Oberflächenwellenbauelemente)
   cf) Ionisationsmelder mit radioaktiver Quelle, welche das Brandaerosol über eine Messung der Ionisierbarkeit der Brandgase nachweisen.

Die einzelnen verwendeten Detektionsverfahren sind weitgehend optimiert. Sie besitzen nur noch geringes Verbesserungspotential. Auf ihnen basierende Melder weisen jedoch in manchen Applikationen Nachteile auf, so dass die im Folgenden angegebenen Anforderungen an Brand(gas)sensoren, wie
1) geringer Energieverbrauch (< 1 mW), da häufig mehr als hundert solcher Meldeeinheiten über eine lange Meldeprimärleitung mit Energie versorgt werden;
2) Langzeitstabilität und Robustheit gegenüber am jeweiligen Einsatzort auf den Melder einwirkende Umgebungseinflüsse, wie zum Beispiel starke Schwankungen der Betriebstemperatur sowie der vorhandenen Luftfeuchte einschließlich möglicher Betauung, korrosiver Atmosphäre oder Staub;
3) Täuschungssicherheit von Einzelmeldern und Meldesystemen;
4) geringe Störanfälligkeit auch unter nicht vorhersehbaren Bedingungen;
5) schnelle Branddetektion;
6) Freiheit in der Anordnung der Melder, insbesondere auch dann, wenn die Melder eine größere Bauform aufweisen;
7) Lieferung von Informationen über die Art des Brandes, um eine Klassifikation des Brandes vorzunehmen und dadurch eine rasche und angepasste Brandbekämpfung zu ermöglichen;
8) geringe Kosten einzelner Sensoren und/oder von Sensorsystemen, um einen wirtschaftlichen Einsatz zu ermöglichen
nicht hinreichend erfüllt sind.

Nachteilig bei der a) Temperaturmessung ist beispielsweise, dass der Wärmetransport über die Gesetze der thermischen Konvektion erfolgt. Diese Messmethode ist daher in der Regel sehr träge, so dass ein Feuer oder Brand nicht schon in der Schwelphase, sondern erst in der Phase des offenen Brandes erkannt wird. Weiterhin ist eine Anordnung in der Regel an der Decke zwingend. Eine Klassifikation des Brandes (offenes Feuer, Kunststoffbrand, Holzfeuer oder Schwelbrand oder ähnliches) ist nicht möglich. Die Auswahl einer geeigneten Brandbekämpfungsmethode ist dadurch erschwert.

Optische Verfahren nach b) sind im Allgemeinen gegenüber partikelhaltigen Bedingungen sehr störanfällig, da Partikel auf dem optischen System adsorbieren. Der Transport des Aerosols zum Melder geschieht wie bei a) durch thermische Konvektion und ist deshalb sehr träge und ermöglicht erst eine späte Branderkennung. Aufgrund der Rauchausbreitung müssen die Melder von nicht unerheblicher Größe an der Decke angeordnet sein. Eine Klassifikation des Brandes ist im Allgemeinen ebenfalls schwer möglich.

Die Früherkennung von Bränden durch die Detektion von Brandgasen ist ein lang untersuchtes Entwicklungsgebiet in der Brandmeldetechnik. Erste Ideen für verbesserte Eigenschaften von Brandmeldern durch Gassensoren gehen schon fast 25 Jahre zurück. Heute werden Brandgassensoren besonders als Zusatz für herkömmliche Brandmelder interessant, um zum Beispiel deren Fehlalarmsicherheit zu erhöhen.

Für eine gezielte Entwicklung von Brandgassensoren ist eine fundierte Grundlage durch die Auswertung von Gasanalysen daher schon verfügbar. Als typische Brandgase wurden neben Wasserdampf und Kohlendioxid auch Kohlenmonoxid, Stickstoffdioxid, Stickstoffmonoxid, Wasserstoff und diverse kurzkettige Kohlenwasserstoffe identifiziert. Zu letzterer Kategorie gehören unverbrannte Pyrolysefragmente (wie zum Beispiel Amide) oder ungesättigte flüchtige Kohlenwasserstoffe. Die Detektion von Brandgasen liefert also wichtige Informationen über das Auftreten und die Charakteristik eines Brandes.

Trotz dieser inhärenten Vorteile gegenüber den herkömmlichen Verfahren wie a) Temperaturmessung und Messung der b) Rauchgasentwicklung, sind auch diese Verfahren nicht frei von Nachteilen.

Bei ca) elektrochemischen Sensoren ist derzeit die Lebensdauer auf ein bis zwei Jahre begrenzt. Weiterhin sind diese Sensoren empfindlich gegenüber tiefen Temperaturen, sowie geringer Feuchtigkeit.

Die cb) Infrarotsensoren zeigen ähnliche negative Eigenschaften wie die unter b) genannten optischen Verfahren zur Rauchgasdetektion.

Auch die cc) Auswertung der Farbänderung von Indikatorsubstanzen durch deren Exposition mit basischen oder sauren Gasen erfüllt nicht vollständig die oben angegebenen Kriterien. Bei einem solchen Verfahren liegen die Indikatorfarbstoffe im optischen Weg einer Leuchtdiode, so dass die Lichtintensität nach der durchstrahlten Strecke zur Branderkennung ausgewertet werden muss. Neben der inhärenten Störanfälligkeit optischer Systeme ist in diesem System die Stabilität der Schichten noch nicht gewährleistet.

Der Einsatz von cd) halbleitenden (resistiven) Sensoren auf der Basis von Metalloxiden ist derzeit auf spezielle Anwendungsfälle optimiert. Ein universeller Einsatz ist derzeit noch nicht möglich. Ein weiterer Nachteil des oben genannten Systems auf der Basis von SnO₂ liegt in der hohen aufzubringenden Heizleistung für die Sensoren. Da häufig mehr als hundert solcher Meldeeinheiten über eine lange Meldeprimärleitung mit Energie versorgt werden, ist es nicht möglich, dass eine Vielzahl solcher Sensorarrays zur Brandmeldung einsetzbar sind.

Die ce) massensensitiven Detektoren, wie Quarzdickenschwinger oder Oberflächenwellenbauelemente, weisen einen zu hohen Preis auf, wenn die Kosten für die Primärelektronik mitberücksichtigt werden.

Die cf) Ionisationsmelder mit radioaktiver Quelle werden aus Entsorgungsgründen von Herstellern und Kunden wenig akzeptiert und sind für eine Brandklassifikation nur bedingt geeignet.

Folgende Maßnahmen, um diese Problematik zu entschärfen, sind gemäß dem Stand der Technik bekannt.
1) Gemäß dem bekannten Stand der Technik wird die Leistungsfähigkeit der Melder durch die Kombination mehrerer Detektionsprinzipien verbessert. Solche Melder sind unter dem Stichwort "Kombimelder" bekannt. Durch eine geeignete Auswahl entsprechender Sensorprinzipien lässt sich eine Vielfalt unterschiedlicher Brandszenarien abdecken.
2) Gemäß dem bekannten Stand der Technik wird die Leistungsfähigkeit der Melder auch durch die Spezialisierung auf ein bestimmtes Anwendungsgebiet verbessert.

Trotzdem ist es derzeit nicht möglich, allen oben angegebenen Anforderungen gerecht zu werden.

Der Erfindung liegt somit die Aufgabe zugrunde, einen Brandmelder vorzustellen, der einen geringen Energieverbrauch aufweist, der langzeitstabil und robust gegenüber den am jeweiligen Einsatzort auf den Melder einwirkenden Umgebungseinflüssen ist, der eine schnelle Branddetektion erlaubt, der eine große Freiheit in der Anordnung der Melder erlaubt, bei dem ein einziges Detektionsprinzip ausreichend ist und der dennoch eine hohe Täuschungssicherheit und geringe Störanfälligkeit aufweist, mit dem eine Klassifikation des Brandes möglich ist, der platzsparend ist und dessen Herstellung geringe Kosten verursacht. Des Weiteren soll der Brandmelder als Sensorsystem universell einsetzbar sein.

Diese Aufgabe wird erfindungsgemäß gelöst durch einen Brandmelder mit den Merkmalen des Anspruchs 1.

Vorteilhafte Ausführungen und Weiterbildungen der Erfindung sind in den Unteransprüchen angegeben.

Der erfindungsgemäße Brandmelder weist mindestens einen Gassensor auf. Der wesentliche Gedanke der Erfindung besteht nun darin, dass zur Gasdetektion mindestens ein Feldeffekttransistor mit einem Sourcebereich, einem Kanalbereich, einer Gateelektrode und einem Drainbereich vorgesehen ist, wobei die Gateelektrode(n) des/der Feldeffekttransistors(en) zur Gasdetektion eine oder mehrere gassensitive Schicht(en) aufweist(en), so dass die Kanalleitfähigkeit(en) des/der Feldeffekttransistors(en) in Abhängigkeit von einem oder mehreren zu detektierenden Gasen steuerbar ist/sind.

Durch die erfindungsgemäße Einbeziehung von derartigen Gassensoren auf der Basis gassensitiver Feldeffekttransistoren als Branddetektor wird die Leistungsfähigkeit von Brandmeldesystemen wesentlich gesteigert.

So lässt sich beispielsweise der Betrieb solcher Brandgassensoren mit einer Leistungsaufnahme im Mikro- oder Milliwattbereich bewerkstelligen, da die Leistungsaufnahme von Feldeffekttransistoren sehr gering ist. Brandmeldesysteme mit mehr als hundert solcher Meldeeinheiten lassen sich daher problemlos realisieren, auch wenn nur eine einzige lange Meldeprimärleitung zur Energieversorgung vorhanden ist.

Brandmelder auf der Basis von Feldeffekttransistoren lassen sich kostengünstig herstellen, da die Technologie zur Herstellung von Feldeffekttransistoren (in der Regel auf Siliziumbasis) schon seit vielen Jahren zur Verfügung steht. Die typische Baugröße solcher Feldeffekttransistoren in der Größenordnung von wenigen um bietet eine Reihe weiterer Vorteile. So sind beispielsweise sehr kleine Bauformen der Melder möglich, auch wenn eine größere Zahl von Einzelsensoren auf einem Chip angeordnet sind. Die Integration mehrerer unabhängiger Signale führt dazu, dass sich die Täuschungssicherheit signifikant verbessert.

Der Transport der Wärme und des Aerosols zum Melder wird durch die Gesetze der thermischen Konvektion bestimmt. Gase werden auch über den Mechanismus der Diffusion transportiert. Ein wie oben angegebener Melder mit Gassensoren wir daher in der Regel schneller erreicht.

Ein weiterer Vorteil liegt darin, dass aufgrund des Transportmechanismus Gasdiffusion die Brandgasmelder auf der Basis von Feldeffekttransistoren (FETs) auch an Wänden oder eventuell sogar im Fußbodenbereich angeordnet werden können. Die leichte und kleine Bauform der Melder verursacht hier keine Einschränkung.

Werden mehrere FETs verwendet, so kann aufgrund der unterschiedlichen zur Verfügung stehenden Signale eine Klassifikation des Brandes erfolgen und weitergegeben werden. So kann beispielsweise ein fortgeschrittener Schwelbrand erkannt und durch den Einsatz schweren Atemschutzes bekämpft werden.

Eine besonders vorteilhafte Ausgestaltung der Erfindung ergibt sich dadurch, dass zwischen einem Kanal und der gassensitiven Schicht der Gateelektrode(n) des/der Feldeffekttransistors(en) zur Gasdetektion ein Spalt vorgesehen ist, in den das/die zu detektierende(n) Gas(e) eindringt(en). Auf diese Weise ist/sind (ein) solche(r) Feldeffekttransistoren zur Gasdetektion in hybrider Aufbautechnologie herstellbar.

Bei dieser Technologie wird ein Feldeffekttransistor zunächst ohne Gateelektrode hergestellt. Die Gateelektrode selbst wird separat mit einer oder mehreren gassensitiven Schichten versehen. Der Zusammenbau erfolgt derart, dass ein Luftspalt zwischen dem Kanal des Transistors und der gassensitiven Schicht gebildet wird, durch den das zu detektierende brandbegleitende Gas eindringen kann (suspended gate). Diese Methode eignet sich für nahezu beliebige Materialien, da keine Ätzprozesse oder andere Nachbehandlungsschritte notwendig sind.

Eine weitere Ausgestaltung der Erfindung ergibt sich dadurch, dass das/die zu detektierende(n) Gas(e) mit der gassensitiven Schicht chemisch reagiert(en) oder auf der gassensitiven Schicht absorbiert(en). Dennoch ist diese Anordnung sowohl für gassensitive Schichten geeignet, die sich bei einem Brand in ein anderes Material verwandeln, wie auch für solche, bei denen sich nur die Oberflächenbeschaffenheit der gassensitiven Schicht verändert. Dadurch erhöht sich die Zahl der Freiheitsgrade.

Eine besonders günstige Ausgestaltung der Erfindung ergibt sich dadurch, dass eine Regenerationseinrichtung zur Entfernung angesammelter Adsorbate von der gassensitiven Schicht vorgesehen ist. Erfindungsgemäß ist vorgesehen, dass in bestimmten vorgebbaren Zeitabständen ein solcher Regenerationsmechanismus in Gang gesetzt wird, der Adsorbatmoleküle entfernt und/oder chemisch veränderte gassensitive Schichten wieder in ihren Ursprungszustand überführt. In der Anwendung stellt diese Regeneration einen Schritt der Rekalibrierung und auch der Selbstüberwachung des Gassensors dar. Eine etwaige Drift des Sensorgrundsignals kann dadurch erkannt und (beispielsweise rechnerisch) eliminiert werden.

Die Erfindung sieht vorteilhafterweise vor, dass die Regenerationseinrichtung eine Heizeinrichtung enthält, so dass die angesammelten Adsorbate von der gassensitiven Schicht durch thermische Desorption entfernt werden. In gewissen Zeitabständen erfolgt demnach eine Aufheizung auf eine Temperatur über der Betriebstemperatur, welche in der Regel die Raumtemperatur ist, auf typischerweise 80° bis 150°C. Weiterhin ist durch die Heizung der gassensitiven Schicht möglich, deren Adsorptionseigenschaften auch während des regulären Betriebs gezielt zu beeinflussen.

Zusätzlich oder alternativ zu dieser Heizeinrichtung sieht die Erfindung eine Elektrode vor, die mit einem elektrischen Feld beaufschlagbar ist, so dass die angesammelten Adsorbate mit Hilfe des elektrischen Feldes entfernt werden. Es bietet sich an, zur Feldbeaufschlagung die suspended Gateelektrode zu verwenden. Analog zur thermischen Beaufschlagung kann auch das elektrische Feld zur gezielten Beeinflussung der Adsorptionseigenschaften der gassensitiven Schicht verwendet werden.

In einer besonders geeigneten Ausführung des Brandmelders sieht die Erfindung vor, dass die gassensitive(n) Schicht(en) einen oder mehrere Komponenten der Materialgruppe der organischen Porphinfarbstoffe enthält. Hierzu gehören beispielsweise Phtalocyanine, Porphyrine oder Cobyrinate. Die besondere Attraktivität dieser gassensitiven Materialien besteht darin, dass sie in nahezu allen Ausleseverfahren wie zum Beispiel Leitfähigkeitsänderungsmessung, Austrittsarbeitsänderungsmessung, Massenänderungsmessung eine Sensitivität auf oxidierende Gase wie Chlor und Stickstoffdioxid im ppb-Bereich zeigen. Als beste Materialien für die Stickoxiddetektion gelten vor allem das Blei- und das Kupferphtalocyanin (PbPc und CuPc).

In einer besonders vorteilhaften Ausführung der Erfindung ist vorgesehen, dass der/die Farbstoff(e) in (eine) Polymermatrix(zen) eingebettet ist/sind. Der Vorteil der Einbettung der Farbstoffe in Polymermatrizen liegt darin, dass die Matrix eine Filterwirkung für bestimmte Gase hat und dass die Farbstoffe stabilisiert und vor Korrosion geschützt werden.

Eine besonders vorteilhafte Ausgestaltung der Erfindung sieht vor, dass die gassensitive(n) Schicht(en) organische Polymere wie Polysiloxane, Polycarbonate und/oder Polyimide enthält. Der Vorteil dieser Stoffe ist darin zu sehen, dass viele Derivate dieser Materialgruppen verfügbar sind und damit eine hohe Selektivität der Sensoren eingestellt werden kann.

Die Erfindung sieht weiterhin vor, dass die gassensitive(n) Schicht(en) zusätzlich oder alternativ eine oder mehrere gassensitive anorganische Stoffe enthält. Hierzu zeigen insbesondere das Titannitrit, Karbonate, Phosphate, Oxide oder Halogenide vorzügliche Eigenschaften.

Eine besonders vorteilhafte Ausführung der Erfindung sieht vor, dass (die) gassensitive(n) Schicht(en) einen oder mehrere gassensitive metallische Stoffe, wie Platin, Paladium, Gold und/oder Nickel enthält.

Des Weiteren sieht die Erfindung vor, dass einem oder mehreren oder allen Feldeffekttransistoren zur Gasdetektion ein oder mehrere Gasfilter vorgeschaltet ist/sind. Diese(r) hat(ben) die Aufgabe, entweder die Detektionsschicht beeinträchtigende korrosive Gase oder aber Täuschungen verursachende Gaskomponenten herausfiltern, die Zielgase jedoch passieren zu lassen. Beispiele derartiger Filter sind Aktivkohlefilter, die mit basischen Substanzen imprägniert sind und korrosive Substanzen wie Schwefeldioxid oder Ozon oder aber auch die Detektion anderer Substanzen störende Gase wie Stickstoffdioxid zu entfernen.

Eine weitere Ausgestaltung der Erfindung ergibt sich dadurch, dass eine Sensorsignalausleseeinheit vorgesehen ist, die die Änderung der Kanalleitfähigkeit(en) in (ein) elektrische(s) Sensorsignal(e) umwandelt. Diese Sensorsignalausleseeinheit kann sowohl separat, als auch in demselben Gehäuse wie der Sensor bzw. das Sensorsystem angeordnet sein.

Es ist vorgesehen, dass das elektrische(n) Sensorsignal(e) (eine) Amplitude(n) oder (eine) Frequenz(en) oder (eine) Phasenlage(n) eines/von elektrischen Strom- oder Spannungssignals(en) ist/sind.

In einer besonders vorteilhaften Ausführung der Erfindung ist eine Signalverarbeitungseinheit vorgesehen, welche zu einer Bewertung der elektrischen Sensorsignale dient. Dazu gehören eine Auswertung der Sensorsignale zur Erkennung eines Brandfalles oder zur Eliminierung von Täuschungen.

So sieht die Erfindung beispielsweise vor, dass der Zeitverlauf des Sensorsignales ausgewertet wird, um zum Beispiel rasche Signalanstiege zu detektieren. Schwellenwerte zur Alarmauslösung werden als Überschreiten einer gewissen Rate des Anstieges des Sensorsignales gesetzt. Hierzu kann es sinnvoll sein, die erste oder zweite Zeitableitung des Sensorsignales zu bilden.

Eine weitere Methode der Signalauswertung ist die Auswertung des Messsignales zu diskreten Zeitpunkten mittels eines neuronalen Netzwerkes. Die Signalauswertung kann auch mit Hilfe von PLH oder PLS oder Fuzzy-Logik erfolgen. Vorteilhaft bei diesen Auswerteverfahren sind höhere Auswertegeschwindigkeiten und damit eine erhöhte Fehlalarmtoleranz und eine Alarmzeitverkürzung.

Weiterhin kann eine Zeitauswertung des Sensorsignales in Kombination mit einer gleitenden Nullpunktnachführung erfolgen, um eine etwaige Drift des Sensorgrundsignals zu eliminieren. Voraussetzung dafür ist, dass die gleitende Nullpunktnachführung Zeitkonstanten von mindestens einer Stunde besitzt, welche deutlich länger ist als die Zeitkonstanten der Veränderung der Brandkenngrößen von wenigen Minuten.

Bei Meldern mit mehreren Sensoren kann ein Vergleich verschiedener Einzelsignale vorgenommen werden, um zum Beispiel einen Plausibilitätstest durchzuführen, falls ein Sensor einen Brand meldet. Zur Bewertung sieht die Erfindung vor, Entscheidungstabellen zu verwenden oder Methoden der Fuzzylogik durchzuführen.

In einer besonders vorteilhaften Ausführung der Erfindung wird davon ausgegangen, dass zusätzlich zu den Gassensoren auf der Basis von Feldeffekttransistoren einer oder mehrere konventionelle Detektoren eingesetzt werden. So ist beispielsweise die Kombination eines Streulichtrauchmelders mit einem Gassensor besonders geeignet. In diesem Fall wird Alarm ausgelöst, wenn der Gassensor ein Brandsignal gibt und der Streulichtrauchmelder ein schwaches Signal aufweist. Weiterhin ist es ausreichend, wenn der Streulichtrauchmelder allein ein starkes Signal gibt, während der Gassensor nur ein schwaches Signal aufweist.

Hierdurch werden sowohl Falschalarme durch Täuschungsgrößen des Gassensors beispielsweise durch Guerempfindlichkeiten wie auch durch Täuschungsgrößen des Streulichtrauchmelders (zum Beispiel durch das Auftreten starker Stäube) vermieden und Brände sicher erkannt. Auch ein etwaiger Ausfall des Gassensors bewirkt keinen Ausfall des Melders, da auch der Streulichtrauchmelder alleine mit den bisherigen Systemen vergleichbarer Empfindlichkeit Alarm auslösen würde.

Im Folgenden werden anhand von schematischen Figuren Ausführungsbeispiele beschrieben. Es zeigen:
- Fig. 1: im Querschnitt einen prinzipiellen Aufbau eines Feldeffekttransistors zur Gasdetektion mit suspended gate,
- Fig. 2: einen Querschnitt eines Aufbaus eines gassensitiven Feldeffekttransistors in hybrider suspended gate Technologie mit µ-machining-Struktur.
- Fig. 3: einen Querschnitt eines Aufbaus eines hybrid suspended gate Feldeffekttransistors mit flip-chip-Struktur.
- Fig. 4: einen Nachweis eines Testfeuers TF 6 nach der europäischen Norm EN 54, Teil 9 nach dem Detektionsprinzip der Austrittsarbeitsänderung mit Hilfe gassensitiver Schichten aus Polyimid, Polykarbonat und Heteropolysiloxan,
- Fig. 5: einen Nachweis eines Testfeuers TF3 (nach EN 54, Teil 9) nach dem Detektionsprinzip der Austrittsarbeitsänderung mit Hilfe einer gassensitiven Schicht aus Bariumkarbonat,
- Fig. 6: einen Zeitverlauf der zeitlichen Ableitung der Austrittsarbeitsänderung beim Testfeuer TF6 (nach EN 54, Teil 9).

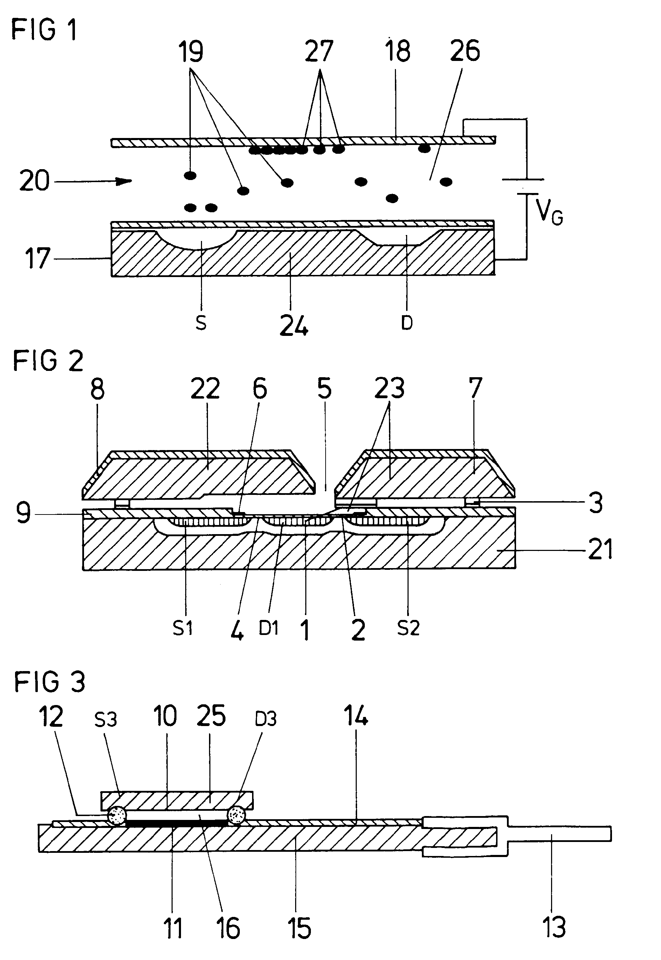

Fig. 1 zeigt einen prinzipiellen Aufbau eines FET-Gassensors 5 mit einem suspended gate 18. Die Gateelektrode 18 dieses Feldeffekttransistors ist wie Fig. 1 zeigt "hängend" über einem Kanalbereich 24 angeordnet. In der Fig. 1 grenzt auf der einen Seite an den Kanalbereich 24 ein wannenförmiger Sourcebereich S an. Auf der anderen Seite grenzt an den Kanalbereich 24 ein Drainbereich D an. Diese drei Bereiche befinden sich auf der Oberfläche eines Grundkörpers 17. Der Gatebereich 18 weist eine definierte Beabstandung zum Grundkörper 17 auf. Der dadurch definierte Spalt 26 zwischen der Gateelektrode 18 und dem Grundkörper 17 ist Bestandteil einer Gateisolierung, wobei die gassensitive Schicht in diese Gateisolierung integriert ist.

In den Spalt 26 gelangen im Brandfall über einen Gaseinlass 20 Brandgasmoleküle 19. Die Brandgasmoleküle 19 wechselwirken mit der gassensitiven Schicht 18. Dies geschieht beispielsweise über eine chemische Reaktion oder indem sich die Brandgasmoleküle 19 als Adsorbate 27 auf der gassensitiven Schicht niederschlagen.

Durch diese Wechselwirkung der Brandgasmoleküle 19 mit der gassensitivem Schicht 18 entsteht ein elektrisches Potential, das sich der angelegten Gatespannung V_{G} additiv überlagert. Dadurch wird der Kanalbereich 24 kapazitiv angesteuert. Die Änderung der Kanalleitfähigkeit kann beispielsweise bei festgehaltener Drain-Source-Spannung als Änderung des Drain-Stromes detektiert werden.

Der in Fig. 2 im Querschnitt dargestellte Aufbau eines gassensitiven FETs ist auf einem Grundkörper aus Silizium aufgebaut, enthält einen Drainbereich D, zwei Sourcebereiche S1 und S2, die zu einem hybrid suspended gate Feldeffekttransistor (HSGFET) bzw. zu einem Referenz-Feldeffekttransistor gehören. Der Drainbereich D und die Sourcebereiche S1 und S2 befinden sich wannenförmig in der Oberfläche des Grundkörpers 21. Zwischen dem Sourcebereich S1 und dem Drainbereich D1 befindet sich ein Kanalbereich 4. Zwischen dem Drainbereich D1 und dem Sourcebereich D2 befindet sich ein Kanalbereich 2. Die Sourcebereiche S1 und S2 sind über metallische Kontakte 9 kontaktiert. Weiterhin befindet sich auf den Sourcebereichen S1 und S2 ein Guard-Ring 6.

Die Gateelektrode 22 des Referenz-FET, sowie die Gateelektrode 7 des HSGFET weisen einen definierten Abstand zum Grundkörper 21 auf. Hierfür sind Abstandshalter 3 vorgesehen, die auf den Kontakten 9 der Sourcebereiche S1 und S2 aufsitzen. Der dadurch definierte Luftspalt 23 zwischen den Gateelektroden 7 und 22 und dem Grundkörper 21 bzw. zu dem Drainbereich D und den Sourcebereichen S1 und S2 ist Bestandteil einer Gateisolierung, wobei die gassensitive Schicht 1 in diese Gateisolierung integriert ist.

Wie die Fig. 2 zeigt, ist zwischen den Gateelektroden 7 und 22 ein Spalt als Gaseinlass 5 vorgesehen. Im Brandfall dringen durch diesen Gaseinlass 5 die Brandgase in den Spalt zwischen die Kanalbereiche 2 bzw. 4 und die Gateelektroden 7 bzw. 22 des HSGFET bzw. des Referenz-FET. Auf der gassensitiven Schicht 1 des HSGFET adsorbiert bzw. reagiert das zu detektierende brandbegleitende Gas. Auf der Oberfläche der gassensitiven Schicht 1 entsteht eine Dipolschicht, wodurch sich die Austrittsarbeit des Materials aus den die gassensitive Schicht 1 besteht und damit sein elektrisches Potential verändert. Dieses elektrische Potential beeinflusst über den Spalt 23 die Kanalleitfähigkeit und damit den Drainstrom des HSGFET bei vorgegebener Drain-Source-Spannung.

Der durch den Sourcebereich S1, den Drainbereich D1 und die Gateelektrode 22 gebildete Referenz-Feldeffekttransistor enthält keine solche gassensitive Schicht bzw. liegt einer nicht gassensitiven Schicht gegenüber. Mit Hilfe eines solchen Referenz-FETs kann beispielsweise eine Kompensation von Temperatureinflüssen realisiert werden.
Der konventionelle Aufbau nach Fig. 2 ist sehr kostenaufwendig in der Fertigung, da beispielsweise die Gateelektrode 7 bzw. 22 durch sogenannte Bulk-Silizium-Mikromechanik geformt werden müssen. Zum anderen ist es erforderlich, dass der gesamten Aufbau in einem Sockel montiert wird.

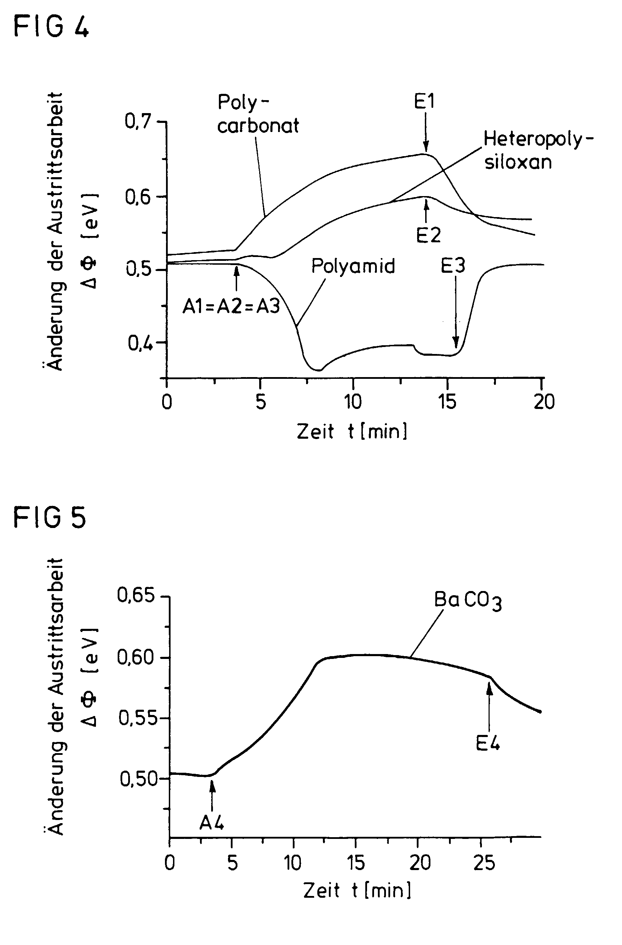

Fig. 3 zeigt eine vorteilhafte Ausgestaltung eines hybrid suspended gate Feldeffekttransistors in hybrider flip-chip-Technologie, einer Aufbautechnologie, bei der der Chip gedreht wird. Hierbei wird ein MOS-Transistor 10 in flip-chip-Technik auf ein mit Leiterbahnen 14 versehenes Keramiksubstrat 15 montiert. Dies kann beispielsweise mittels eines Leitklebstoffes 12 geschehen. Eine gassensitive Schicht 11 ist partiell auf dem Keramiksubstrat 15 aufgebracht und mit den Leiterbahnen 14 entsprechend kontaktiert. Der Gaskanal ist analog zu den in Fig. 1 und Fig. 2 dargestellten Transistoren ein Spalt 16 zwischen einer auf dem Keramiksubstrat 15angebrachten Gateelektrode und dem mit Hilfe des Leitklebers 12 beabstandete MOS-Feldeffekttransistors, mit Sourcebereich S3 und Drainbereich D3 und dazwischenliegendem Kanalbereich 25.

Bei diesem Aufbau kann auf die Bulk-Silizium-Mikromechanik-Fertigung (µ-machining) verzichtet werden, das heißt einer Strukturierung von Sᵢ-Substraten, um neben elektrischer Funktionalität auch mechanische oder hydrodynamische Funktionalität zu erreichen. Stattdessen wird ein elektrisch isolierendes Trägersubstrat eingesetzt. Das Keramiksubstrat 15 dient als Träger der gassensitiven Schicht 11 und gleichzeitig als Träger des gesamten Sensoraufbaus, so dass kein Einbau in einen Sensorsockel notwendig ist. Auf dieses Keramiksubstrat 15 können Steckstifte 13 angebracht werden, so dass das elektronische Bauelement direkt, beispielsweise in eine single-in-line Steckverbindung eingebracht werden kann. Alternativ ist auch die Ausführung als surface-mounted-device (SMD)-Bauelement möglich. An die Stelle der Steckstifte 13 tritt dann eine SMD-Verbindung.

Dieser Sensortyp vereinbart die Forderung nach geringem Energieverbrauch durch Auslesbarkeit der Detektionsschicht an Raumtemperatur sowie nach geringen Fertigungskosten der Detektionselemente. Durch eine Vielzahl einsetzbarer Sensorschichten sind eine Vielzahl von Brandgasen detektierbar.

Für die Branddetektion einzusetzende Sensorschichten umfassen zum Beispiel folgende Materialgruppen:
1) organische Porphinfarbstoffe, zum Beispiel Phthalocyanine, Porphyrine oder Cobyrinate
2) organische Polymere, wie Polysiloxane, Polycarbonate und Polyimide,
3) anorganische Stoffe wie Titannitrit, Karbonate, Phosphate, Oxide, Halogenide.
4) Metalle, wie zum Beispiel Platin, Paladium, Gold und Nikkel.

Es ist günstig, diese Sensormaterialien, insbesondere die organischen Farbstoffe in Polymermatrizen einzubinden.

Fig. 4 zeigt beispielhaft den Nachweis eines Spiritusbrandes mit Hilfe unterschiedlicher organischer Polymere als gassensitive Schichten.

Die Figur zeigt die Änderung der Austrittsarbeit von Polykarbonat, Heteropolysiloxan und Polyimid als Reaktion auf das Auftreten eines Spiritusbrandes (Testfeuer TF6) zum Zeitpunkt t = 3,5 min. Der Brandbeginn ist mit Hilfe der Bezugszeichen A1 = A2 = A3 angedeutet.

Beim Polykarbonat ändert sich die Austrittsarbeit ↙, welche mit Hilfe einer Kelvinsonde bestimmt wurde, innerhalb von zehn Minuten nahezu linear um 100 meV und strebt danach sehr langsam einem um etwa 120 meV über dem Anfangswert liegenden Sättigungswert zu. Zum Zeitpunkt t = 13,5 min wird die Anordnung belüftet (angedeutet durch das Bezugszeichen El) und die Änderung 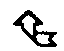 ↙ der Austrittsarbeit nimmt wieder exponentiell ab, so dass bereits innerhalb von fünf bis zehn Minuten der Anfangswert wieder erreicht ist.

Beim Heteropolysiloxan nimmt die Änderung der Austrittsarbeit einen sehr ähnlichen Verlauf. Der Sättigungswert der Austrittsarbeitsänderung 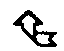 ↙ beträgt allerdings nur 70 bis 80 meV. Nach der Belüftung E2 klingt die Änderung der Austrittsarbeit wesentlich langsamer ab, so dass der Ausgangsaustrittsarbeitswert nicht wieder erreicht wird.

Nach Brandbeginn A3 verkleinert sich die Austrittsarbeit ↙ des Polyimids innerhalb von vier Minuten auf einen um 150 meV niedrigeren Sättigungswert, der während des Brandes nahezu konstant bleibt. Nach Belüftung zum Zeitpunkt t = 15,5 min steigt die Austrittsarbeit ↙ wiederum innerhalb von zwei Minuten auf den Anfangswert an.

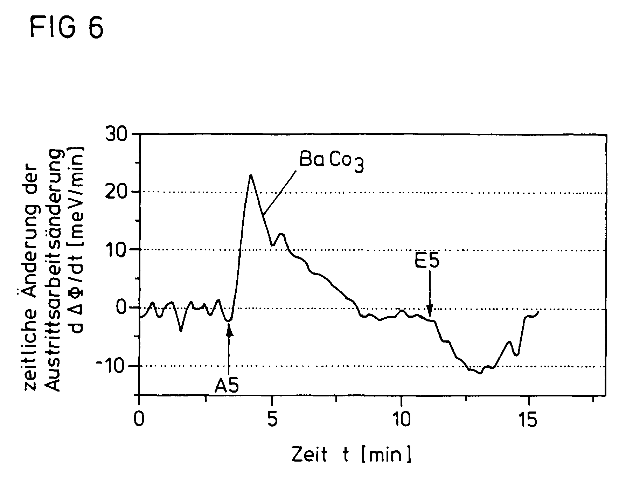

Als weiteres Beispiel für die Funktionstüchtigkeit eines solchen Gassensors ist in Fig. 5 ein Brandnachweis mit dem anorganischen Detektionsmaterial Bariumkarbonat dargestellt. Die Figur zeigt den Nachweis des Testfeuers TF3 durch BaCO₃. Der Brandbeginn A4 ist in diesem Beispiel zum Zeitpunkt t = 3,5 min. Die Figur zeigt, dass sich die Austrittsarbeit ↙ von einem Anfangswert innerhalb von zehn Minuten auf einen um 100 meV erhöhten Wert der Austrittsarbeit ↙ stabilisiert. Zum Zeitpunkt t = 25 min wird die Anordnung wieder belüftet Belüftung E4). Die Austrittsarbeitänderung 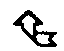 ↙ klingt wiederum exponentiell ab. Der Anfangswert wird nach mehreren Stunden wieder erreicht.

Anstelle einer Bestimmung einer Austrittsarbeitsänderung 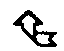 ↙ sieht die Erfindung vor, dass auch das zeitliche Änderungsverhalten von Detektionsschichten überwacht und ausgewertet wird. Fig. 6 zeigt hierzu den Anstieg einer mit einer BaCO₃-Schicht nach Fig. 5 ausgelesener Austrittsarbeitsänderung. Zu sehen ist, dass in der 1. Ableitung d 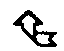 ↙/dt ein einfach auszuwertender Peak erscheint als Antwort auf einen Brandbeginn A5 zum Zeitpunkt t = 3,5 min. Die Steilheit von Austrittsarbeitsänderungen 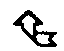 ↙, das heißt der Wert der 1. Ableitung d 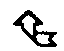 ↙/dt zum Zeitpunkt t = 3,5 min (Brandbeginn A5) kann zur Brandklassifikation verwendet werden.

Um stets dieselbe Sensitivität des Sensors zu gewährleisten, muss der Sensor ständig rekalibriert und selbst überwacht werden. Insbesondere müssen angesammelte Adsorbatmoleküle von der Detektionsschicht entfernt werden. Zur Entfernung einer solchen Adsorbatschicht eignen sich die thermische Desorption bzw. die Felddesorption.

Die Erfindung sieht daher vor, dass der FET-Gassensor spezielle Elektroden enthält, welche beheizbar sind. In gewissen Abständen muss dann eine Aufheizung des Sensors auf eine Temperatur über der Betriebstemperatur erfolgen. Typischerweise liegt diese Temperatur bei 80° bis 150°C.

Alternativ oder zusätzlich sieht die Erfindung eine oder mehrere Elektroden vor, so dass die Detektionsschicht in gewissen Abständen mit einem starken elektrischen Feld beaufschlagt werden kann. Dies kann beispielsweise auch über die suspended Gateelektrode selbst geschehen.

Des Weiteren sieht die Erfindung vor, dass vor dem Feldeffekttransistor ein Gasfilter angeordnet ist. Dieser hat die Aufgabe, entweder die Detektionsschicht beeinträchtigende korrosive Gase oder aber Täuschungen verursachende Gaskomponenten herauszufiltern, die Zielgase jedoch passieren zu lassen. Ein Beispiel für derartige Filter sind zum Beispiel Aktivkohlefilter, die mit basischen Substanzen imprägniert sind und korrosive Substanzen wie SO₂ oder O₃ oder aber auch die Detektion anderer Substanzen störende Gase wie NO₂ zu entfernen.

## Patentansprüche

1. Brandmelder mit mindestens einem Gassensor,
**dadurch gekennzeichnet,** dass zur Gasdetektion mindestens ein Feldeffekttransistor mit einem Sourcebereich (S, S2, S3), einem Kanalbereich (2, 24, 25), einer Gatelektrode (7, 11, 18) und einem Drainbereich (D, D2, D3) vorgesehen ist, wobei die Gateelektrode(n) des/der Feldeffekttransistors(en) zur Gasdetektion eine oder mehrere gassensitive Schichten aufweist(en), so dass die Kanalleitfähigkeit(en) des/der Feldeffekttransistors(en) in Abhängigkeit von einem oder mehreren zu detektierenden Gasen steuerbar ist/sind.

2. Brandmelder nach Anspruch 1,
**dadurch gekennzeichnet,** dass der Gassensor zur Detektion der Austrittsarbeitsänderung des gassensitiven Materiales ein Suspended Gate FET-Gassensor ist.

3. Brandmelder nach Anspruch 2,
**dadurch gekennzeichnet,** dass der Gassensor zur Detektion der Austrittsarbeitsänderung des gassensitiven Materiales ein in hybrider Aufbautechnologie erzeugter Suspended Gate FET-Gassensor ist.

4. Brandmelder nach einem der vorangegangenen Ansprüche,
**dadurch gekennzeichnet,** dass zwischen einem Kanal (2, 24, 25) und der Gateelektrode (7, 11, 18) eines Feldeffekttransistors zur Gasdetektion ein Spalt (16, 23, 26) vorgesehen ist, in den das/die zu detektierende(n) Gas(e) (19) eindringt(en).

5. Brandmelder nach einem der vorangegangenen Ansprüche,
**dadurch gekennzeichnet,** dass das/die zu detektierende(n) Gas(e) (19) mit der/den gassensitiven Schicht(en) (1, 11, 18) chemisch reagiert(en).

6. Brandmelder nach einem der vorangegangenen Ansprüche,
**dadurch gekennzeichnet,** dass das/die zu detektierende(n) Gas(e) (19) auf der/den gassensitiven Schicht(en) (1, 11, 18) adsorbiert(en).

7. Brandmelder nach einem der vorangegangenen Ansprüche,
**dadurch gekennzeichnet,** dass das/die zu detektierende(n) Gas(e) (19) eine oder mehrere Austrittsarbeit(en) (Φ) der gassensitiven Schicht(en) (1, 11, 18) verändert(n).

8. Brandmelder nach Anspruch 7,
**dadurch gekennzeichnet,** dass die Änderung(en) (ΔΦ) der Austrittsarbeit(en) der gassensitiven Schicht(en) (1, 11, 18) die Kanalleitfähigkeit(en) des/der Feldeffekttransistors (en) steuert.

9. Brandmelder nach einem der vorangegangenen Ansprüche,
**dadurch gekennzeichnet,** dass der Brandmelder mit dem/den Gassensoren in einem Gehäuse angeordnet ist.

10. Brandmelder nach einem der vorangegangenen Ansprüche,
**dadurch gekennzeichnet,** dass eine Regenerationseinrichtung zu einer Entfernung angesammelter Adsorbate (27) auf der/den gassensitiven Schicht(en) (1, 11, 18) vorgesehen ist/sind.

11. Brandmelder nach Anspruch 10,
**dadurch gekennzeichnet,** dass die Regenerationseinrichtung eine oder mehrere Heizeinrichtungen enthält, so dass die angesammelten Adsorbate (27) von der/den gassensitiven Schicht(en) (1, 11, 18) durch thermische Desorption entfernbar sind.

12. Brandmelder nach Anspruch 10 oder 11,
**dadurch gekennzeichnet,** dass die Regenerationseinrichtung eine oder mehrere Elektroden enthält, so dass die angesammelten Adsorbate (27) von der/den gassensitiven Schicht(en) (1, 11, 18) durch Beaufschlagung mit einem elektrischen Feld entfernbar sind.

13. Brandmelder nach einem der vorangegangenen Ansprüche,
**dadurch gekennzeichnet,** dass die gassensitive(n) Schicht(en) (1, 11, 18) einen oder mehrere gassensitive Komponenten der Materialgruppe der organischen Prophinfarbstoffe, zum Beispiel Phthalocyanine oder Porphyrine, enthalten.

14. Brandmelder nach einem der vorangegangenen Ansprüche,
**dadurch gekennzeichnet,** dass die gassensitive(n) Schicht(en) (1, 11, 18) einen oder mehrere gassensitive Komponenten der Materialgruppe Cobyrinsäure oder deren durch Austausch funktioneller Gruppen entstandener Derivate enthalten.

15. Brandmelder nach einem der vorangegangenen Ansprüche,
**dadurch gekennzeichnet,** dass die gassensitive(n) Schicht(en) organische gassensitive Polymere wie Polysiloxane, Polykarbonate und/oder Polyimide enthalten.

16. Brandmelder nach einem der vorangegangenen Ansprüche,
**dadurch gekennzeichnet,** dass die gassensitive(n) Schicht(en) (1, 11, 18) eine oder mehrere gassensitive anorganische Komponenten, wie TiN, Karbonate, Phosphate, Oxide und/oder Halogenide enthalten.

17. Brandmelder nach einem der vorangegangenen Ansprüche,
**dadurch gekennzeichnet,** dass die gassensitive(n) Schicht(en) (1, 11, 18) einen oder mehrere gassensitive metallische Stoffe, wie Pt, Pd, Au und/oder Ni auf geeigneten Trägermaterialien wie Oxyden enthalten.

18. Brandmelder nach einem der Ansprüche 13 bis 17,
**dadurch gekennzeichnet,** dass die Farbstoffe in Polymermatrizen eingebettet sind.

19. Brandmelder nach einem der vorangegangenen Ansprüche,
**dadurch gekennzeichnet,** dass einem oder mehreren oder allen Feldeffekttransistoren zur Gasdetektion ein oder mehrere Gasfilter vorgeschaltet sind.

20. Brandmelder nach einem der vorangegangenen Ansprüche,
**dadurch gekennzeichnet,** dass eine Sensorsignalausleseeinheit vorgesehen ist, die die Änderung der Kanalleitfähigkeit(en) in (ein) elektrische(s) Sensorsignal(e) umwandelt.

21. Brandmelder nach Anspruch 20,
**dadurch gekennzeichnet,** dass das/die elektrische(n) Sensorsignal(e) (eine) Amplitude(n) oder (eine) Frequenz(en) oder (eine) Phasenlage(n) eines (von) elektrische(n) Strom- oder Spannungssignals(e) ist/sind.

22. Brandmelder nach einem der vorangegangenen Ansprüche,
**dadurch gekennzeichnet,** dass zusätzlich zu dem/den Feldeffekttransistor(en) zur Gasdetektion ein oder mehrere konventionelle Detektoren vorgesehen sind.

23. Brandmelder nach einem der vorangegangenen Ansprüche,
**dadurch gekennzeichnet,** dass eine Signalverarbeitungseinheit zu einer Bewertung der elektrischen Sensorsignale vorgesehen ist.

24. Brandmelder nach einem der Ansprüche 20 bis 23,
**dadurch gekennzeichnet,** dass ein kontinuierlicher Zeitverlauf des/der Sensorsignals(e) ausgewertet wird.

25. Brandmelder nach Anspruch 24,
**dadurch gekennzeichnet,** dass eine ein-oder mehrfache zeitliche Ableitung des/der Sensorsignals(e) ausgewertet wird.

26. Brandmelder nach einem der Ansprüche 20 bis 25,
**dadurch gekennzeichnet,** dass ein oder mehrere oder alle Sensorsignale zu diskreten Zeitpunkten ausgewertet werden.

27. Brandmelder nach einem der Ansprüche 20 bis 26,
**dadurch gekennzeichnet,** dass PLH oder PLS oder Fuzzy oder neuronale Netzwerke zur Signalverarbeitung eingesetzt werden.

28. Brandmelder nach einem der vorangegangenen Ansprüche,
**dadurch gekennzeichnet,** dass die Signalausleseeinheit in dem Gehäuse des Brandmelders angeordnet ist.

29. Brandmelder nach einem der vorangegangenen Ansprüche,
**dadurch gekennzeichnet,** dass die Signalverarbeitungseinheit in dem Gehäuse des Brandmelders angeordnet ist.
